(19)

Europäisches
Patentamt
European
Patent Office
Office européen
des brevets

(11)  **EP 1 716 672 B1**

(12)  **EUROPEAN PATENT SPECIFICATION**

(45) Date of publication and mention
of the grant of the patent:
**01.04.2009 Bulletin 2009/14**

(21) Application number: **04713055.4**

(22) Date of filing: **20.02.2004**

(51) Int Cl.:
***H04L 12/56*** (2006.01)

(86) International application number:
**PCT/EP2004/001693**

(87) International publication number:
**WO 2005/081465 (01.09.2005 Gazette 2005/35)**

(54) **METHOD, APPARATUS AND COMPUTER PROGRAM PRODUCT FOR CONTROLLING DATA PACKET TRANSMISSIONS**

VERFAHREN, VORRICHTUNG UND COMPUTERPROGRAMMPRODUKT ZUR STEUERUNG VON PAKETDATENÜBERTRAGUNGEN

PROCEDE, APPAREIL ET PROGICIEL POUR LE CONTROLE DE TRANSMISSION DE PAQUETS DE DONNEES

(84) Designated Contracting States:
**AT BE BG CH CY CZ DE DK EE ES FI FR GB GR HU IE IT LI LU MC NL PT RO SE SI SK TR**

(43) Date of publication of application:
**02.11.2006 Bulletin 2006/44**

(73) Proprietor: **TELEFONAKTIEBOLAGET LM ERICSSON (publ)**
**164 83 Stockholm (SE)**

(72) Inventors:
• **KAMPMANN, Markus**
**52072 Aachen (DE)**
• **HORN, Uwe**
**52066 Aachen (DE)**
• **HARTUNG, Frank**
**52134 Herzogenrath (DE)**

• **BALDO, Nicola**
**I-45100 Rovigo (IT)**
• **LUNDBERG, Jonas**
**S-972 36 Lulea (SE)**
• **WESTERLUND, Magnus**
**S-164 76 Kista (SE)**
• **STILLE, Mats**
**S-116 43 Stockholm (SE)**

(74) Representative: **Röthinger, Rainer**
**Wuesthoff & Wuesthoff**
**Patent- und Rechtsanwälte**
**Schweigerstrasse 2**
**81541 München (DE)**

(56) References cited:
**EP-A- 0 912 015         DE-A- 10 053 065**
**US-A- 5 918 020         US-A1- 2003 198 184**

EP 1 716 672 B1

## Description

### Field of the Invention

The invention relates to the communication of data. More specifically, the invention relates to a technique for controlling data packet transmissions.

### Background of the Invention

Increasing amounts of data are being transmitted from servers to clients via communication infrastructures such as packet-based IP networks. One particular application that is increasing in popularity is multimedia streaming. However, improvements must be made in providing reliable data streams before widespread adoption of such services. For example, as data transmission rates between the IP network and the client (the "link rate") tend to fluctuate, any disturbances in data delivery to the client may result in severe degradation of the playout at the client. In particular, it is important that there be a sufficient supply of packets at the client as they are fetched by a multimedia application as playout (i.e., the display of the multimedia file by the multimedia application or player) progresses.

While constant rate packet transmission algorithms may be utilized if there are no bandwidth concerns and if the rate at which the packets will be used by the application is known, adaptive techniques must be used when there are varying link rates. With such arrangements, client buffers are commonly used to acquire and selectively deliver packets to the client on an as needed basis based on the content rate (i.e., the rate at which the packets are used to provide content to the client). However, client buffer size is often limited, and a packet transmission rate combined with a link rate that is higher than the content rate will rapidly result in a client buffer overflow. Once overflow has occurred, excess packets are dropped, and with most systems, dropped packets are typically not retransmitted due to bandwidth and delay constraints associated with packet recovery. If not enough packets are received by the client buffer during playout (buffer underflow), the packet delivery will be interrupted, which in the case of a multimedia stream, will result in a degradation or complete cessation of content.

In addition to client buffers, network buffers (such as buffers in the SGSN (Serving GPRS Support Node) or in the RNC (Radio Network Controller)) within a fixed or mobile network (e.g., IP network) can be utilized to buffer transmitted packets to accommodate varying link rates. For wireless communications networks, network buffers typically reserve a separate and often fixed storage capacity for each user connection, albeit of a limited size. If the link rate, because of variations in quality of service (such as an outage of a wireless link resulting from, for example, a handover), dips below the data transmission rate from the server, then packets will begin to accumulate in the network buffer. If these packets exceed the capacity of the network buffer, then packets may be lost which are typically not recovered. If on the other hand, the link rate exceeds the data transmission rate, then the client buffer will receive packets at a rate equal to the data transmission rate.

Some conventional techniques for controlling packet transmission rates utilize information within Real Time Transport Control Protocol (RTCP) receiver reports (RRs) to determine whether to adjust the transmission rate (see, for example, Ott et al. "Extended RTP Profile for RTCP-based Feedback", Internet Draft draft-ietf-avt.rtcp-feedback-07.txt (work in progress) June 2003; Schulzrinne et al., "RTP: A transport protocol for real-time applications," RFC 3550, July 2003; and Rey et al., "RTP Retransmission Payload Format", Internet-Draft draft-ietf-avt-rtp-retransmission-08.txt (work in progress), June 2003). Information pertaining to the oldest buffered sequence number (OBSN) with the client buffer and the highest received sequence number (HRSN) within the client buffer is contained with the RR and is used to determine the consumed buffer space as the size of each packet within the range from the HRSN to the OBSN is known. With each RR, the transmission rate is adjusted based on an estimated rate at which the amount of data within the network buffer is increasing or decreasing relative to a preferred network buffer fill level. Furthermore, if the free space within the client buffer is below a preferred client buffer fill level, then the transmission rate is adjusted to be equal to the content rate. While this arrangement provides certain advantages, the transmission rate increases during link outages in an effort to increase the client buffer level which can result in a network buffer overflow and packet loss.

Accordingly, it will be appreciated that there remains a need for an improved technique for seamless content delivery by avoiding client and network buffer overflow and related packet losses.

EP 0 912 015 A2 relates to a method for managing queue overload in time and frequency division half- and full-duplex multiple access wireless communications networks employing the "on-demand multiple access fair queuing" system.

### Summary of the Invention

The invention may be embodied in a method according to independent claim 1 for controlling packet transmissions from a server coupled via a network buffer (either directly or via a fixed or mobile network such as the Internet) to a client having a client buffer. Such a method includes the steps of determining the network buffer fill level and determining the client buffer fill level (either determination step may first occur or the determination steps may occur simultaneously). The method further comprises the step of determining a size of a packet to be transmitted next, or a "next packet". If the transmission of the next packet would cause the network buffer fill level to exceed a first threshold and/or the client buffer fill level to exceed a second threshold, then the transmission of the next packet is delayed. These steps may be conducted periodically to ensure that the capacity of both the network buffer and the client buffer does not exceed certain levels (which may be based on their maximum capacities).

While conventional techniques typically alter packet transmission rates without regard to packet size, the current invention preferably comprises the step of determining the packet size of the next packet to be transmitted. If the packet size would cause the network buffer or the client buffer to exceed predetermined levels, then the transmission of the packet can be delayed (which indirectly affects the packet transmission rate). Merely adjusting the packet transmission rate, without reference to the size of the next packet (or packets), can result in unwanted buffer overflow as the rate at which the packet is transmitted is irrelevant if there is not sufficient capacity within the buffers to buffer the packet.

Determination of the network buffer fill level may be based on the aggregate size of packets within the network buffer. In some variations, the network buffer may comprise a plurality of individual buffers that may at least partially be coupled in series, and so a determination must be made as to the fill level of one or more (or each) of these buffers to ensure that the transmission of the next packet would not cause a buffer overflow. With this arrangement, the first threshold may be based, for example, on the buffer having the lowest capacity or the capacity of the buffer nearest to the wireless transmitter, or alternatively, each of the buffers may be individually monitored and individual thresholds may be assigned.

In addition, the client buffer fill level may be determined based on the aggregate size of packets within the client buffer. The client buffer fill level determination may also be based on the aggregate size of packets within the client buffer and the aggregate size of packets within the network buffer. The latter arrangement assumes a scenario where all of the packets within the network buffer are immediately transmitted to the client buffer and can be used in arrangements where it is important to avoid client buffer overflow.

If the network buffer is comprised of two or more individual buffers, the client buffer fill level may be determined based on the aggregate size of packets within the client buffer and the aggregate size of packets within selected ones or within all of the individual buffers that constitute the network buffer. In such an arrangement, the content of one or more buffers closest to the client buffer (in the transmission direction) may be aggregated.

The buffer fill level determinations may be aided by assigning each of the packets with sequential identification numbers (or codes). Such an arrangement may permit the determination of the network buffer fill level to be based on an aggregate sum of the size of packets ranging between the highest sequence number packet transmitted by the server and the packet having a sequence number immediately succeeding or equaling the highest sequence number of a packet within the client buffer.

In addition, the client buffer fill level, in some embodiments, may either be determined based on an aggregate sum of the size of packets ranging between the highest sequence number packet and the lowest sequence number packet within the client buffer, or it may be determined based on an aggregate sum of the size of packets ranging between the highest sequence number packet transmitted by the server and the lowest sequence number packet within the client buffer.

Information pertaining to the packets within the network buffer and the client buffer may be obtained through a variety of mechanisms, such as via periodic feedback reports from the client. The periodic feedback reports might contain information associated with at least one of client buffer fill level status, highest received sequence number by the client buffer, and oldest buffered sequence number. One type of feedback report that might be used with the current invention is a Real-Time Transport Control Protocol receiver report.

If sequential numbers are not assigned to the packets and/or the client does not transmit feedback reports, the determination regarding the network buffer fill level and/or the client buffer fill level may be based on an estimate of the amount of time for a transmitted packet to be played by the client after transmission by the server.

The first threshold, which, according to the invention, may be set as a maximum or target fill level for the network buffer, may be set based on the maximum network buffer capacity. The second threshold may be set based on the client buffer maximum capacity. Both of the thresholds may be based on a percentage of the maximum buffer capacities, such as 95 percent, to further ensure that neither buffer is subject to overflow conditions.

The first threshold may also be determined by the steps of assigning an initial threshold value, monitoring whether the network buffer overflows, increasing the threshold value from the initial threshold value if a network buffer overflow does not occur within a predefined period of time, and/or reducing the threshold value from the initial threshold value if a network buffer overflow occurs. This process may be repeated a predetermined number of times or for a predetermined amount of time, provided that the resulting threshold value is not too high to cause network buffer overflow and too low to increase the likelihood of client buffer underflow.

The method may also include the step of determining the maximum number of packets that may be buffered by at least one of the network buffer and the client buffer. This determination may be based on information pertaining to overflows in the buffers or it may be obtained from pre-existing measurements. These determinations may then be used to set the values for the first and second thresholds.

In addition, the method, in some variations, includes the step of (indirectly) adjusting the transmission rate. In one embodiment, the transmission rate is adjusted to approximately maintain the network buffer at approximately the first threshold or the client buffer at the second threshold. In other words, the method may act to periodically adjust the packet transmission rate to the maximum level possible while avoiding an overflow of either of the buffers.

Depending on the implementation, the client may be a mobile communications terminal such as a mobile telephone, and in addition, or in the alternative, the server may be integrated into a mobile communications terminal so that the link between the server and the network may be wireless. Also, the method according to the present invention may be performed by one or more intermediary network nodes (such as proxies) arranged between the server and the client. The method may also be utilized in architectures having plurality of data streams being buffered by the network buffer and/or client buffer (or multiple client buffers depending on the configuration of the client).

The invention may also be embodied in a computer program product according to claim 20, which may be stored on a computer readable recording medium, comprising program code portions for performing any of the steps of the above methods when the computer program product is run on a computer system.

The invention may further comprise an apparatus according to claim 22 comprising a computer processor and a memory coupled to the processor, where the memory is encoded with one or more programs that may perform any of the steps of the above methods.

In yet another embodiment, the invention relates to an apparatus according to claim 23 adapted for controlling packet transmissions from a server via a network buffer to a client having a client buffer. The apparatus comprises a first determination unit adapted for determining the network buffer fill level and a second determination unit adapted for determining the client buffer fill level. The apparatus is further adapted for determining a size of a packet to be transmitted next. The apparatus further comprises a control unit for delaying transmission of the next packet if the packet would cause either the network buffer fill level to exceed a first threshold or the client buffer fill level to exceed a second threshold.

The apparatus may be configured as a fixed or mobile network component, such as a network server and/or a wireless terminal. Also, the apparatus may be constituted by an intermediary network node, such as a proxy.

**Brief Description of the Drawings**

In the following the invention will be described with reference to exemplary embodiments illustrated in the figures, in which:

Fig. 1     is a first schematic diagram useful for understanding and implementing the invention;

Fig. 2     is a second schematic diagram of useful for understanding and implementing the invention;

Fig. 3     is a process flow diagram of method embodiment of the invention;

Fig. 4     is a process flow diagram of an example useful for understanding and implementing the invention;

Fig. 5     is a schematic of an apparatus embodiment of the invention:

Fig. 6A    is a first chart graphically illustrating a network buffer fill level relative to a network buffer maximum capacity for a first sample data run using a first conventional technique;

Fig. 6B    is a second chart graphically illustrating a network buffer fill level rela- tive to a network buffer maximum capacity for the first sample data run using a second conventional technique;

Fig. 6C    is a third chart graphically illustrating a network buffer fill level relative to a network buffer maximum capacity for the first sample data run us- ing the technique provided by the current invention;

Fig. 7A    is a first chart graphically illustrating a client buffer fill level relative to a client buffer maximum capacity for the first sample data run using a first conventional technique;

Fig. 7B    is a second chart graphically illustrating a client buffer fill level relative to a client buffer maximum capacity for the first sample data run using a second conventional technique; and

Fig. 7C    is a third chart graphically illustrating a client buffer fill level relative to a client buffer maximum capacity for the first sample data run using the technique provided by the current invention.

**Detailed Description of the Preferred Embodiments**

In the following description, for purposes of explanation and not limitation, specific details are set forth, such as particular sequences of steps and various configurations, *etc.* in order to provide a thorough understanding of the present invention. It will be apparent to one skilled in the art that the present invention may be practiced in other embodiments that depart from these specific details. Moreover, those skilled in the art will appreciate that the functions explained herein below may be implemented using software functioning in conjunction with a programmed microprocessor or general purpose computer, and/or using an application specific integrated circuit (ASIC). It will also be appreciated that while the current invention is primarily described as a method, it may also be embodied in a computer program product as well as a system comprising a computer processor and a memory coupled to the processor, where the memory is encoded with one or more programs that may perform the methods disclosed herein.

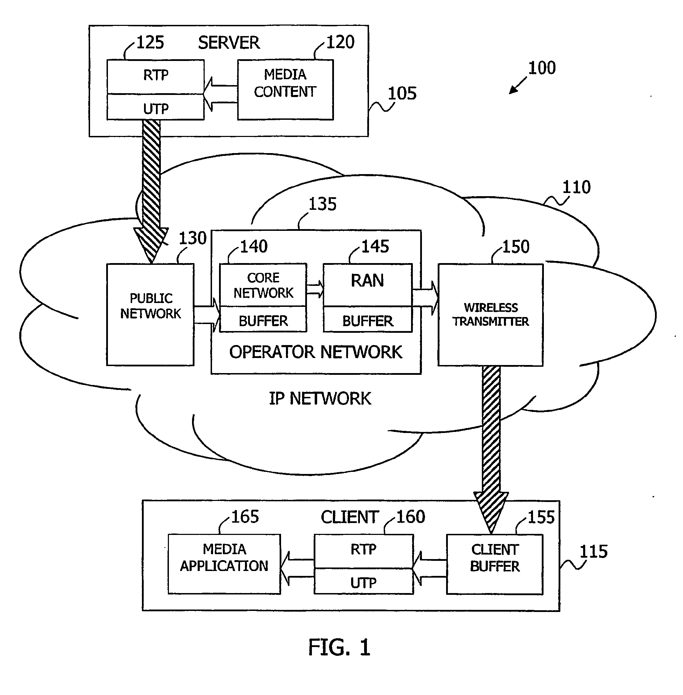

Fig. 1 illustrates a sample architecture 100 that may be used in connection with the invention including a server 105 that may be coupled to a client 115 via a communications pathway such as an IP network 110. The server include a media content module 120 that accesses and transmits certain media content (e.g., multimedia data files) via a RTP/UTP module 125 using a streaming standard such as RTP (Real time Transport Protocol) over UTP or other data transport protocol for managing the real-time transmission of multimedia data (with a transport layer protocol such as UDP - User Datagram Protocol). The packets are transmitted to a public network 130 (e.g., the Internet, however, an external public network is not required when the server is directly coupled to the operator network 135) that delivers the packets to an operator network 135, such as a mobile communications operator "wired" network, coupled thereto.

The operator network 135 includes a core network 140 that provides communication links between the server 105 and the client 115. The core network 140, which may optionally have a buffer, provides the packets received from the RTP/UTP module 125 for buffering in a buffer within a radio access network (RAN) 145 (such as a buffer in the SGSN or in the RNC) prior to their transmission by a wireless transmitter 150. The buffers of the core network 140 (if buffering is utilized) and the RAN 145 are arranged in series and constitute a network buffer.

The client 115 receives the packets transmitted by the wireless transmitter 150 in a client buffer 155. The packets are transferred from the client buffer 155 to a RTP/UTP module 160 for delivery to and use by the media application module 165 (or multimedia player). For purposes of this application, the phrase "packet transmission rate" will refer to the rate of transmission of packets from the server 105 to the IP network 110, the phrase "link rate" will refer to the rate of transmission of packets from the IP network 110 to the client 115, and the phrase "content rate" shall refer to the rate that data is transferred from the client buffer 115 to the media application module 165 for playout by the media application module 165.

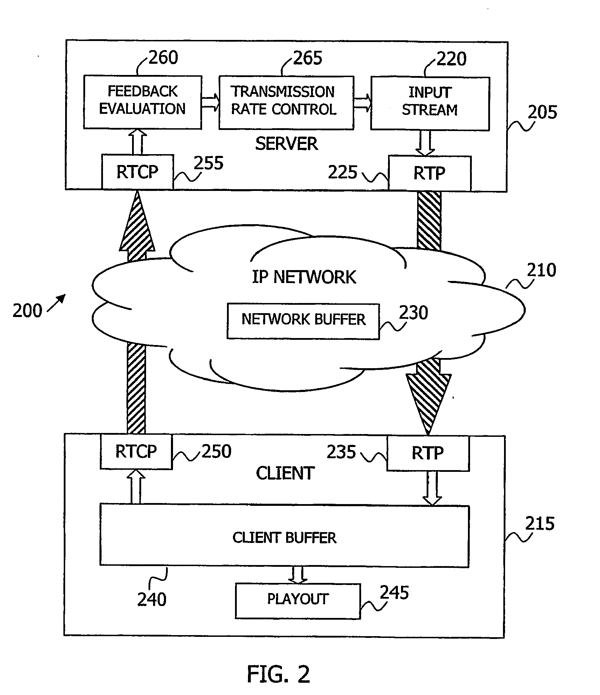

Fig. 2 relates to a particular architecture 200 (although it will be appreciated that certain of the components may be combined and implemented) that may be used with the current invention having a server 205 that communicates with a client 215 via an IP network 210. Packets that are to be transmitted are received by the server 205 via an input stream module 220 that delivers the packets to an RTP module 225 for processing and transmission over the IP network 210 and are buffered by a network buffer 230 until they are transmitted to the client 215. The transmitted packets are received by the client 215 via an RTP module 235 which delivers the processed packets to a client buffer 240. These packets are buffered by the client buffer 240 until they are sent to a playout module 245 for use by a client application (such as a multimedia data file player). The client 215 further includes an RTCP module 250 coupled to the client buffer 240 for providing feedback (e.g., an RR) to an RTCP module 255 within the server 205. The RTCP information contains quality of service feedback including, inter alia, the HRSN and OBSN within the client buffer 240 as well as Playout Delay (PD).

The server 205 evaluates the RTCP information using a feedback evaluation module 260. Based on this evaluation, the server 205 may elect to adjust the transmission rate of packets received by the input stream module 220 via a transmission rate control module 265. This transmission adjustment may include the complete cessation of data transmission (i.e., no further packets will be transmitted by the server 205 to the client 215), or it may include an upward or downward adjustment of the data transmission rate depending on criteria described below.

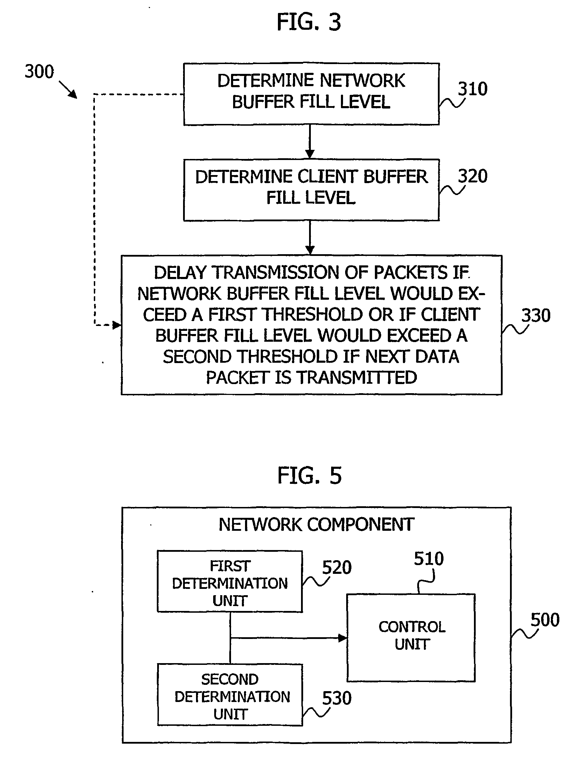

With reference to Fig. 3, a method embodiment 300 of the invention is illustrated which may be used, for example, with a system such as those illustrated in Figs. 1, 2 and 5. The method begins, at step 310, with the determination of the network buffer fill level, or in other words, the aggregate size of accumulated packets contained within the network buffer. The method also determines, at step 320, the client buffer fill level, or in other words, in some cases, the aggregate size of accumulated packets contained within the client buffer. Once these determinations have been made (and the skilled artisan will appreciate that the client buffer level may be determined prior or coincidental to the network buffer fill level), at step 330, the transmission of packets are delayed by the server, if the network buffer fill level would exceed a first threshold and / or if the client buffer fill level would exceed a second threshold, if the next packet is transmitted.

Provided that each of these conditions are met (i.e., that the transmission of the next packet will not cause the network buffer fill level to exceed the first threshold and will additionally not cause the client buffer fill level to exceed the second threshold), then the next packet (or packets) will be transmitted by the server (which preferably is at a maximum transmission rate that complies with both of these conditions). Examples of how to determine the network and client buffer fill levels and the first and second thresholds are described below.

In some variations, the server assigns a sequence number to each transmitted packet. The server may store the sequence numbers of transmitted packets as well as the size of each packets in a server database (which may be internal or external to the server). As a result, the server database may be accessed to provide information such as the Highest Transmitted Sequence Number (HTSN) corresponding to the sequence number of the last transmitted packet and the size of each transmitted packet. This information may be used to determine the network buffer fill level, which may be based, in part, on the cumulative size of all transmitted packets up to sequence number $j$, $A_j$, which may be calculated using the following formula, where $S_i$ is the size in bytes of packet with sequence number $i$

$$A_j = \sum_{i=ISN}^{j} S_i$$

In other words, the network buffer fill level, $N_{lev}$, is equal to the cumulative size of all packets which have not been received by the client buffer according to the last RR, but which have actually been transmitted by the server. This value is calculated as:

$$N_{lev} = A_{HTSN} - A_{HRSN}$$

The client buffer fill level may be determined in one of two manners. First, it may be estimated by the server based on solely on the playout rate (i.e., the server estimates how many of the transmitted packets have been fetched by the multimedia application). Second, the client buffer fill level may be based on a combination of the playout rate and OBSN data within the RRs.

Let $T_i$ be the timestamp (in seconds) of packet with sequence number $i$, and let $T_{ISN} = 0$ (as an illustration). Playout offset $t_{off}$ can then be defined as follows:

$$t_{off} = t_{RR} + PD - T_{OBSN}$$

where $t_{RR}$ is the time at which the RR arrives at the server.

Knowledge of playout offset allows the calculation of the expected playout time $\overline{T_i}$ for a generic sequence number $i$, according to the following formula:

$$\overline{T_i} = T_i + t_{off}$$

For each time $t > t_{off}$, the server can estimate the last played sequence number (LPSN) as follows:

$$LPSN = \max \{ I \mid \overline{T_i} < t \}$$

Once the LPSN is known, the client buffer fill level $C_{lev}$ may be estimated using a formula such as:

$$C_{lev} = A_{HRSN} - A_{LPSN}$$

While this formula provides a good estimate for the client buffer occupancy at time $t_{rr}$, it tends to underestimate the actual value of $t > t_{rr}$ before the next RR is received, because newly sent packets are not included. In some situations, such as those with low tolerances for disruption, a "worst-case scenario" client buffer occupancy may be calculated that assumes that all packets currently buffered in the network buffer are transferred to the client buffer. In such an arrangement, the client buffer fill level is calculated as follows (where HRSN has been substituted with HTSN):

$$C_{lev} = A_{HTSN} - A_{LPSN}$$

The server may set maximum fill levels for both of the network and client buffers, $N_{max}$ and $C_{max}$ respectively. Preferably, $C_{max}$ is set to a value slightly smaller than the actual client buffer size (which can be signalled to the server via RTSP during session initialization), and $N_{max}$ is based on pre-existing information regarding the IP network buffer size or, in some cases, the network buffer fill level may be estimated (and if the network buffer comprises multiple buffers, $N_{max}$ may be based on the buffer having the lowest capacity). For example, $N_{max}$ may be set by assigning a first threshold value corresponding to an estimated network buffer maximum capacity (which may be based on factors such as average network buffer size, expected network buffer size for IP network, etc.). If the network buffer overflows, then $N_{max}$ is incrementally lowered until a condition exists where the network buffer does not periodically overflow.

The server will not transmit additional packets unless both of the following conditions are met:

$$N_{lev} + S_i \leq N_{max}$$

$$C_{lev} + S_i \leq C_{max}$$

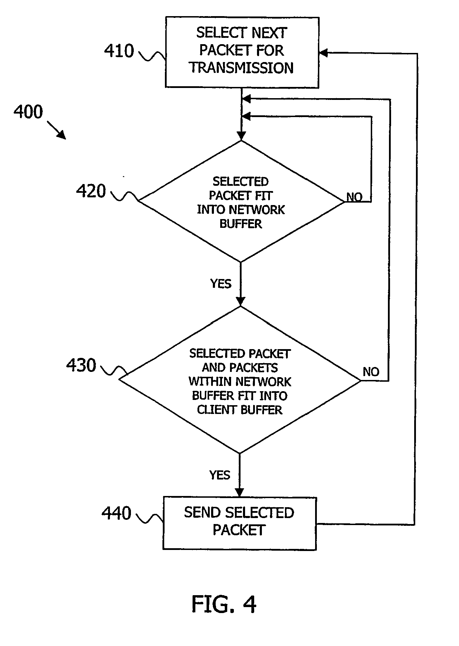

This relationship is illustrated in the flow diagram 400 of Fig. 4. At step 410, a packet is selected for transmission. It is then determined, at step 420, whether the packet will fit into the network buffer, or in other words, whether the addition of the selected packet will be equal to or greater than $N_{max}$. If the addition of the selected packet into the network buffer would not exceed the maximum fill level, then it is determined, at step 430, whether the selected packet, and optionally the packets within the network buffer, would fit into the client buffer (which may already have packets being buffered therein). If this condition is met, then at step 440, the server sends the selected packet. If the criteria of either step 420 or 430 is not met, then step 420 is repeated (at periodic intervals) until the next packet may be sent.

A network component 500, useful for practicing aspects of the invention in connection with a server, a network having a network buffer, and a client having a client buffer, is illustrated in Fig. 5. The network component 500 (which may be a network node such as a proxy, a wireless terminal, and the like) includes a first determination unit 520 which determines the network buffer fill level, a second determination unit 530 that determines the client buffer fill level, and a control unit 510 coupled to the first determination unit 520 and the second determination unit 530. If the control unit 510 determines that either the transmission of the next subsequent packet within a transmission queue by the server would cause either of the network buffer or the client buffer to respectively exceed first and second capacity thresholds, then the control unit 510 will send a message to a transmitting server to temporarily cease the transmission of packets. If the transmission of the next packet will not cause the capacity of the network buffer to exceed the first threshold and/or the client buffer to exceed the second threshold, then the control unit 510 will either send a new message to the server to recommence packet transmissions (in the case that a message was previously sent to cease transmission), or the control unit 510 will not send a cessation signal to the server (i.e., a signal will not be sent if there is no action that needs to be taken by the server).

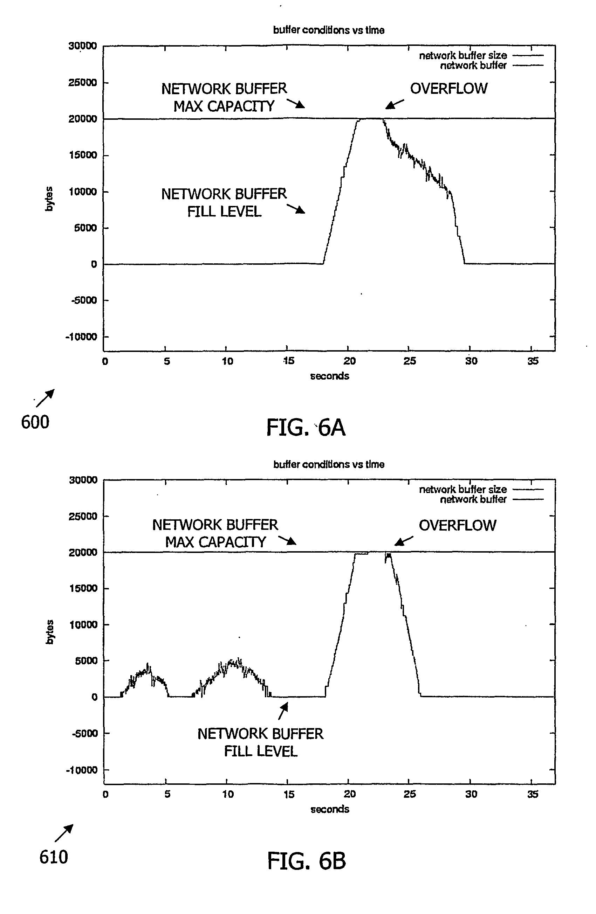

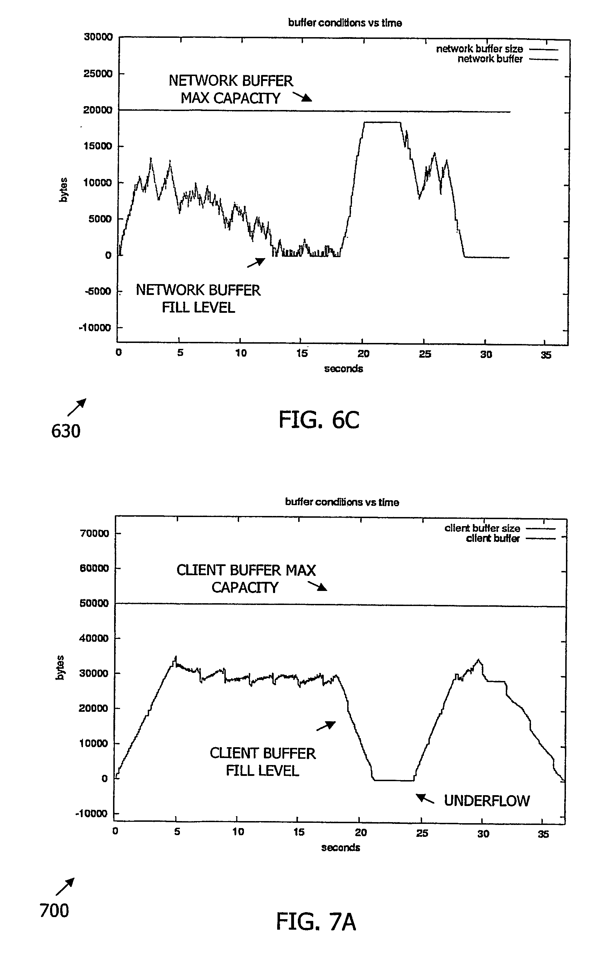

Figs. 6A - 6C demonstrate the improvements of the current invention with regard to network buffer fill level as compared to conventional techniques. Fig. 6A, in graph 600, illustrates the network buffer fill level (in bytes) as compared to the network buffer maximum capacity (with one incident of network buffer overflow) for a simulated data transfer using a Constant Rate Transmission (CRT) technique. Fig. 6B, in graph 610, illustrates the network buffer fill level as compared to the network buffer maximum capacity (with one incident of network buffer overflow) for a simulated data transfer using a Proportional Derivative Feedback Control (PDFC) rate technique. Fig. 6C, in graph 620, illustrates the network buffer fill level as compared to the network buffer maximum capacity (without network buffer overflow) for a simulated data transfer using a technique according to the current invention.

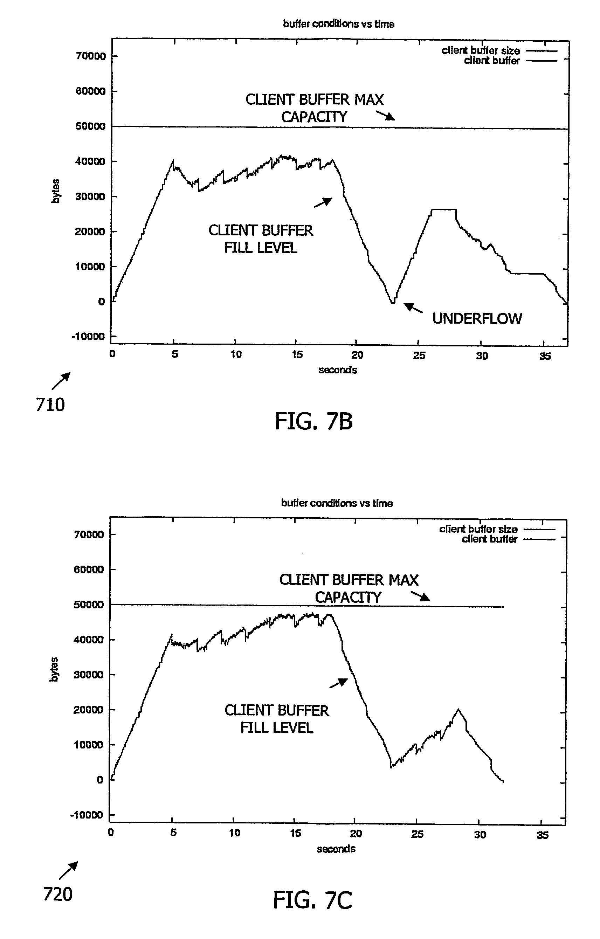

Figs. 7A - 7C demonstrate the improvements of the current invention with regard to client buffer fill level as compared to conventional techniques. Fig. 7A, in graph 700, illustrates the client buffer fill level as compared to the client buffer maximum capacity (with one incident of client buffer underflow) for a simulated data transfer using the CRT technique. Fig. 7B, in graph 710, illustrates the client buffer fill level as compared to the client buffer maximum capacity (with one incident of client buffer underflow) for a simulated data transfer using the PDFC rate technique. Fig. 7C, in graph 720, illustrates the client buffer fill level as compared to the client buffer maximum capacity (without client buffer underflow) for a simulated data transfer using a technique according to the current invention.

For purposes of the simulated data transfer, it was assumed that the link rate was the bottleneck and that the bandwidth of the wired network (i.e., the network between the server and the IP network) was not a limiting factor (such as when the server is either located directly on the operator network or connected to it by a non-congested public network).

The simulated data transfer used a wireless link having a 64 kbps bandwidth with a five second complete link outage between seconds 18 and 23. For the media content, a H.263 VBR video sequence consisting of 359 packets with an average bit rate of 57 kbps was used). In addition, a five second pre-buffering time was used for the playout by the media application (e.g., multimedia player). A 50 KB client buffer and a 20 KB network buffer were also assumed. Apart from losses due to overflow in these two buffers, no other losses were assumed during transmission, including in the wireless link where the existence of a link-level ARQ mechanism providing reliable transmission was assumed. RTCP Sender and Receiver Reports were implemented, with a RR interval of one second. NACK reports were issued and retransmissions, when estimated RTT showed arrival at the receiver before presentation time to be likely, were carried out with a conventional Early Deadline First strategy.

The CRT technique used a transmission rate 60 Kbps and is representative of the generic category of conventional piece-wise constant rate transmission techniques because the transmission rate is chosen in order to provide satisfactory client buffer management in cases where available bandwidth is not a concern. As illustrated in Figs. 6A and 7A, as CRT is not concerned in maximizing client buffer fill level, and therefore a client buffer underflow with consequent rebuffering occurs shortly after the link outage. Moreover, as a consequence of the rebuffering event, the client buffer tends to underflow.

The PDFC technique used RTCP feedback information and may be represented by the following equation:

$$R[n+1] = R[n] - K_1\left(C_{lev}[n] - C_t\right) - K_2 \frac{\left(C_{lev}[n] - C_{lev}[n-1]\right)}{\Delta t_{n,n-1}}$$

where $n$ indicates the instant at which each RR is received, $R$ is the transmission rate, $C_t$ is the target level for client buffer occupancy, $\Delta t_{n,n-1}$ is the time interval between current and last RR, and $K_1$ and $K_2$ are the feedback gains of the proportional and the derivative term respectively. After testing different gains and target levels for the client buffer, it was determined that the values $K_1 = 2, K_2 = 4$, and $C_t = 40$ KB provided the maximum client buffer fill level without resulting in client buffer overflow. Therefore, these values were used to generate the data in Figs. 6B and 7B which resulted in both a network buffer overflow and a client buffer underflow.

As can be seen, the current invention provides the optimum network and client buffer fill levels, without network buffer overflows and client buffer underflows, compared to the conventional techniques, thereby avoiding packet loss and performance degradation associated therewith. Table 1 below lists the number of packets lost using the respective techniques as well as the number of packets that were not played out as a result of these overflows for the simulated data transfer.

**TABLE 1**

|  | CRT | PDFC | INVENTION |
|---|---|---|---|
| PACKETS LOST DUE TO BUFFER OVERFLOWS | 34 | 50 | 0 |
| PACKETS MISSING PLAYOUT | 18 | 29 | 0 |

As can be appreciated by one of ordinary skill in the art, the current invention and the techniques associated therewith provide an enhanced end user perceived experience for applications such as multimedia streaming by avoiding both network and client buffer overflows. The invention may be used standalone or it may be used in connection with packet scheduling or content rate control algorithms which adapt the media content rate based on the link rate.

Furthermore, the skilled artisan will also appreciate that there are many different techniques that may be used to determine network and client buffer fill levels, including estimations based on data within RRs and Sender Reports, and that the current invention may be implemented in parallel with a plurality of data packet streams simultaneously being buffered in one or more network buffers for transmission to one or more clients.

On of ordinary skill in the art will further appreciate that the invention may be implemented in and by various types of network components, such as network terminals, network nodes, and the like. In particular, the invention may be practiced by mobile terminals, proxies (that could divide the transmission path), and fixed terminals.

While the present invention has been described with respect to particular embodiments, those skilled in the art will recognize that the present invention is not limited to the specific embodiments described and illustrated herein. Therefore, while the present invention has been described in relation to its preferred embodiments, it is to be understood that this disclosure is only illustrative. Accordingly, it is intended that the invention be limited only by the scope of the claims appended hereto.

## Claims

1. A method for controlling packet transmissions from a server (205) coupled via a network buffer (230) to a client (215) having a client buffer (240), the method comprising the steps of:

    determining the network buffer fill level;
    determining the client buffer fill level; and
    **characterized in** further comprising:
    determining a size of a packet to be transmitted next; and delaying transmission of the packet to be transmitted next if the packet to be transmitted next would cause either the network buffer fill level to exceed a first threshold or the client buffer fill level to exceed a second threshold.

2. The method of claim 1, wherein the network buffer fill level is determined based on the aggregate size of packets within the network buffer (230).

3. The method of any of the preceding claims, wherein the client buffer fill level is determined based on the aggregate size of packets within the client buffer (240).

4. The method as in claim 1 or 2, wherein the client buffer fill level is determined based on the aggregate size of packets within the client buffer (240) and the aggregate size of packets within the network buffer (230).

5. The method of any of the preceding claims, wherein the packets are assigned sequential identification numbers.

6. The method of claim 5, wherein the network buffer fill level is determined based on an aggregate sum of the size of packets ranging between the highest sequence number packet transmitted by the server (205) and the packet having a sequence number immediately succeeding or equaling the highest sequence number of a packet within the client buffer (240).

7. The method of claim 6, wherein the client buffer fill level is determined based on an aggregate sum of the size of packets ranging between the highest sequence number packet and the lowest sequence number packet within the client buffer (240).

8. The method as in claims 5 or 6, wherein the client buffer fill level is determined based on an aggregate sum of the size of packets ranging between the highest sequence number packet transmitted by the server and the lowest sequence number packet within the client buffer (240).

9. The method as in claim 1, wherein the determination regarding at least one of the network buffer fill level and the client buffer fill level is based on an estimate of the amount of time for a transmitted packet to be played by the client (215) after transmission by the server (205).

10. The method of any of the preceding claims, wherein the first threshold is based on a maximum network buffer capacity.

11. The method of any of the preceding claims, wherein the first threshold is determined using a method comprising the steps of:

assigning an initial threshold value;
monitoring whether the network buffer overflows;
increasing the threshold value from the initial threshold value if a network buffer overflow does not occur within a predefined period of time; and/ or
reducing the threshold value from the initial threshold value if a network buffer overflow occurs.

12. The method of any of the preceding claims, wherein the second threshold is based on a maximum client buffer capacity.

13. The method of any of the preceding claims, further comprising the step of determining the maximum number of packets that may be buffered by at least one of the network buffer (230) and the client buffer (240).

14. The method of any of the preceding claims, further comprising the step of adjusting the packet transmission rate to approximately maintain the capacity of the network buffer (230) at approximately the first threshold and/or the client buffer (240) at the second threshold.

15. The method of any of the preceding claims, further comprising the step of receiving periodic feedback reports from the client (215).

16. The method of claim 15, wherein the feedback reports comprise data associated with at least one of client buffer fill level status, highest received sequence number by the client buffer, and oldest buffered sequence number.

17. The method of any of the preceding claims, wherein the client (215) is a mobile communications terminal; and/or wherein the server (205) is integrated into a mobile communications terminal.

18. The method of any of the preceding claims, wherein there are a plurality of data streams buffered by the client buffer (240); and/or wherein there are a plurality of data streams buffered by the network buffer (230).

19. The method of any of the preceding claims, wherein the network buffer is comprised of a plurality of buffers coupled in series.

20. A computer program product comprising program code portions for performing the steps of any of the preceding claims when the computer program product is run on a computer system.

21. The computer program product of claim 20, wherein the computer program product is stored on a computer readable recording medium.

22. An apparatus comprising a computer processor and a memory coupled to the processor, where the memory is encoded with one or more programs that may perform the steps of any of claims 1 to 19.

23. An apparatus (500) adapted for controlling packet transmissions from a server via a network buffer to a client having a client buffer, the apparatus comprising:

a first determination unit (520) adapted for determining the network buffer fill level;
a second determination unit (530) adapted for determining the client buffer fill level; and
**characterized in that** the apparatus (500) is further adapted for determining a size of a packet to be transmitted next; and that the apparatus further comprises:
a control unit (510) adapted for delaying transmission of the packet to be transmitted next if the packet to be transmitted next would cause either the network buffer fill level to exceed a first threshold or the client buffer fill level to exceed a second threshold.

**Patentansprüche**

1. Verfahren zum Steuern von Paketübertragungen von einem Server (205), der über einen Netzwerkpuffer (230) mit einem Client (215) mit einem Client-Puffer (240) verbunden ist, wobei das Verfahren die Schritte umfasst:

Bestimmen eines Füllstands des Netzwerkpuffers;

Bestimmen eines Füllstands des Client-Puffers; und
**gekennzeichnet durch** ferner umfassend:
Bestimmen einer Größe eines als nächstes zu übertragenden Pakets; und
Verzögern einer Übertragung des als nächstes zu übertragenden Pakets, falls das als nächstes zu übertragende Paket entweder den Füllstand des Netzwerkpuffers zum Überschreiten eines ersten Schwellwerts oder den Füllstand des Client-Puffers zum Überschreiten eines zweiten Schwellwerts veranlassen würde.

2. Verfahren nach Anspruch 1, wobei der Füllstand des Netzwerkpuffers auf Grundlage der aggregierten Größe von Paketen im Netzwerkpuffer (230) bestimmt wird.

3. Verfahren nach einem der vorhergehenden Ansprüche, wobei der Füllstand des Client-Puffers auf Grundlage der aggregierten Größe von Paketen im Client-Puffer (240) bestimmt wird.

4. Verfahren nach Anspruch 1 oder 2, wobei der Füllstand des Client-Puffers auf Grundlage der aggregierten Größe von Paketen im Client-Puffer (240) und der aggregierten Größe von Paketen im Netzwerkpuffer (230) bestimmt wird.

5. Verfahren nach einem der vorhergehenden Ansprüche, wobei den Paketen fortlaufende Identifikationsnummern zugeordnet werden.

6. Verfahren nach Anspruch 5, wobei der Füllstand des Netzwerkpuffers bestimmt wird auf Grundlage einer aggregierten Summe der Größe von Paketen im Bereich zwischen dem durch den Server (205) übertragenen Paket mit höchster Laufnummer und dem Paket mit einer Laufnummer, die unmittelbar folgt auf oder gleich ist der höchsten Laufnummer eines Pakets im Client-Puffer (240).

7. Verfahren nach Anspruch 6, wobei der Füllstand des Client-Puffers bestimmt wird auf Grundlage einer aggregierten Summe der Größe von Paketen im Bereich zwischen dem Paket mit höchster Laufnummer und dem Paket mit niedrigster Laufnummer im Client-Puffer (240).

8. Verfahren nach Anspruch 5 oder 6, wobei der Füllstand des Client-Puffers bestimmt wird auf Grundlage einer aggregierten Summe der Größe von Paketen im Bereich zwischen dem durch den Server übertragenen Paket mit höchster Laufnummer und dem Paket im Client-Puffer (240) mit niedrigster Laufnummer.

9. Verfahren nach Anspruch 1, wobei das Bestimmen hinsichtlich des Füllstands des Netzwerkpuffers und/oder des Füllstands des Client-Puffers auf einer Schätzung eines Zeitraums für ein übertragenes Paket basiert, das nach Übertragung durch den Server (205) von dem Client (215) abgespielt werden soll.

10. Verfahren nach einem der vorhergehenden Ansprüche, wobei der erste Schwellwert auf einer maximalen Kapazität des Netzwerkpuffers basiert.

11. Verfahren nach einem der vorhergehenden Ansprüche, wobei der erste Schwellwert mittels eines Verfahrens bestimmt wird, das die Schritte umfasst:

Zuordnen eines Anfangsschwellwerts;
Überwachen, ob der Netzwerkpuffer überläuft;
Erhöhen des Schwellwerts gegenüber dem Anfangsschwellwert, falls ein Überlauf des Netzwerkpuffers innerhalb einer vorbestimmten Zeitspanne nicht auftritt; und/oder Verringern des Schwellwerts gegenüber dem Anfangsschwellwert, falls ein Überlauf des Netzwerkpuffers auftritt.

12. Verfahren nach einem der vorhergehenden Ansprüche, wobei der zweite Schwellwert auf einer maximalen Kapazität des Client-Puffers basiert.

13. Verfahren nach einem der vorhergehenden Ansprüche, ferner umfassend den Schritt des Bestimmens der maximalen Anzahl an Paketen, die durch den Netzwerkpuffer (230) und/oder den Client-Puffer (240) zwischengespeichert werden können.

14. Verfahren nach einem der vorhergehenden Ansprüche, ferner umfassend den Schritt des Einstellens der Paketübertragungsrate, um die Kapazität des Netzwerkpuffers (230) bei annähernd dem ersten Schwellwert und/oder den Client-Puffer (240) bei dem zweiten Schwellwert annähernd zu halten.

**15.** Verfahren nach einem der vorhergehenden Ansprüche, ferner umfassend den Schritt des Empfangens periodischer Rückmeldeberichte vom Client (215).

**16.** Verfahren nach Anspruch 15, wobei die Rückmeldeberichte Daten umfassen im Zusammenhang mit einem Füllstandsstatus des Client-Puffers und/oder einer höchsten, durch den Client-Puffer empfangenen Laufnummer und/oder einer ältesten zwischengespeicherten Laufnummer.

**17.** Verfahren nach einem der vorhergehenden Ansprüche, wobei der Client (215) ein mobiles Kommunikationsendgerät ist; und/oder
wobei der Server (205) in ein mobiles Kommunikationsendgerät integriert ist.

**18.** Verfahren nach einem der vorhergehenden Ansprüche, wobei eine Vielzahl von Datenströmen durch den Client-Puffer (240) zwischengespeichert wird; und/oder wobei eine Vielzahl von Datenströmen durch den Netzwerkpuffer (230) zwischengespeichert wird.

**19.** Verfahren nach einem der vorhergehenden Ansprüche, wobei der Netzwerkpuffer eine Mehrzahl seriell verbundener Puffer umfasst.

**20.** Computerprogrammprodukt mit Programmcodeabschnitten zum Ausführen der Schritte eines der vorhergehenden Ansprüche, wenn das Computerprogrammprodukt auf einem Computersystem ausgeführt wird.

**21.** Computerprogrammprodukt nach Anspruch 20, wobei das Computerprogrammprodukt auf einem computerlesbaren Aufzeichnungsmedium gespeichert ist.

**22.** Vorrichtung umfassend einen Computerprozessor und einen mit dem Prozessor verbundenen Speicher, wobei der Speicher mit einem oder mehreren Programmen beschrieben ist, die die Schritte eines der Ansprüche 1 bis 19 ausführen können.

**23.** Vorrichtung (500) zum Steuern von Paketübertragungen von einem Server über einen Netzwerkpuffer zu einem Client mit einem Client-Puffer, wobei die Vorrichtung umfasst:

eine erste Bestimmungseinheit (520), die zum Bestimmen eines Füllstands des Netzwerkpuffers ausgebildet ist;
eine zweite Bestimmungseinheit (530), die zum Bestimmen eines Füllstands des Client-Puffers ausgebildet ist; und
**dadurch gekennzeichnet, dass** die Vorrichtung (500) ferner zum Bestimmen einer Größe eines als nächstes zu übertragenden Pakets ausgebildet ist; und dass die Vorrichtung ferner umfasst:
eine Steuerungseinheit (510), die zum Verzögern einer Übertragung des als nächstes zu übertragenden Pakets ausgebildet ist, falls das als nächstes zu übertragende Paket entweder den Füllstand des Netzwerkpuffers zum Überschreiten eines ersten Schwellwerts oder den Füllstand des Client-Puffers zum Überschreiten eines zweiten Schwellwerts veranlassen würde.

**Revendications**

**1.** Procédé de commande de transmissions en paquet à partir d'un serveur (205) couplé par l'intermédiaire d'une mémoire tampon (230) de réseau à un client (215) possédant une mémoire tampon (240) de client, le procédé comprenant les étapes de :

détermination du niveau de remplissage de la mémoire tampon de réseau ;
détermination du niveau de remplissage de la mémoire tampon de client ; et **caractérisé en ce qu'**il comprend en outre :
la détermination d'une taille d'un prochain paquet à transmettre ; et
le retard de la transmission du prochain paquet à transmettre si le prochain paquet à transmettre entraîne soit le dépassement d'un premier seuil par le niveau de remplissage de la mémoire tampon de réseau soit le dépassement d'un deuxième seuil par le niveau de remplissage de la mémoire tampon de client.

**2.** Procédé selon la revendication 1, dans lequel le niveau de remplissage de la mémoire tampon de réseau est déterminé en se basant sur la taille globale des paquets dans la mémoire tampon (230) de réseau.

**3.** Procédé selon l'une quelconque des revendications précédentes, dans lequel le niveau de remplissage de la mémoire tampon de client est déterminé en se basant sur la taille globale des paquets dans la mémoire tampon (240) de client.

**4.** Procédé selon la revendication 1 ou 2, dans lequel le niveau de remplissage de la mémoire tampon de client est déterminé en se basant sur la taille globale des paquets dans la mémoire tampon (240) de client et la taille globale des paquets dans la mémoire tampon (230) de réseau.

**5.** Procédé selon l'une quelconque des revendications précédentes, dans lequel les paquets sont affectés de numéros d'identification séquentiels.

**6.** Procédé selon la revendication 5, dans lequel le niveau de remplissage de la mémoire tampon de réseau est déterminé en se basant sur une somme globale de la taille des paquets s'étendant entre le paquet à numéro de séquence le plus élevé transmis par le serveur (205) et le paquet ayant un numéro de séquence immédiatement consécutif ou égal au numéro de séquence le plus élevé d'un paquet dans la mémoire tampon (240) de client.

**7.** Procédé selon la revendication 6, dans lequel le niveau de remplissage de la mémoire tampon de client est déterminé en se basant sur une somme globale de la taille des paquets s'étendant entre le paquet à numéro de séquence le plus élevé et le paquet à numéro de séquence le plus faible dans la mémoire tampon (240) de client.

**8.** Procédé selon les revendications 5 ou 6, dans lequel le niveau de remplissage de la mémoire tampon de client est déterminé en se basant sur une somme globale de la taille des paquets s'étendant entre le paquet à numéro de séquence le plus élevé transmis par le serveur et le paquet à numéro de séquence le plus faible dans la mémoire tampon (240) de client.

**9.** Procédé selon la revendication 1, dans lequel la détermination se rapportant à au moins l'un du niveau de remplissage de la mémoire tampon de réseau et du niveau de remplissage de la mémoire tampon de client est basé sur une estimation du laps de temps nécessaire à un paquet transmis pour être lu par le client (215) après transmission par le serveur (205).

**10.** Procédé selon l'une quelconque des revendications précédentes, dans lequel le premier seuil est basé sur une capacité maximale de la mémoire tampon de réseau.

**11.** Procédé selon l'une quelconque des revendications précédentes, dans lequel le premier seuil est déterminé au moyen d'une méthode comprenant les étapes de :

affectation d'une valeur initiale de seuil ;
contrôle de ce qu'il y a ou non des dépassements de capacité de la mémoire tampon de réseau ;
augmentation de la valeur de seuil à partir de la valeur initiale de seuil si aucun dépassement de capacité de la mémoire tampon de réseau ne se produit dans un laps de temps prédéfini ; et/ou
diminution de la valeur de seuil à partir de la valeur initiale de seuil si un dépassement de capacité de la mémoire tampon de réseau se produit.

**12.** Procédé selon l'une quelconque des revendications précédentes, dans lequel le deuxième seuil est basé sur une capacité maximale de la mémoire tampon de client.

**13.** Procédé selon l'une quelconque des revendications précédentes, comprenant en outre l'étape de détermination du nombre maximal de paquets qui peuvent être mis en mémoire par au moins l'un de la mémoire tampon (230) de réseau et de la mémoire tampon (240) de client.

**14.** Procédé selon l'une quelconque des revendications précédentes, comprenant en outre l'étape de réglage de la vitesse de transmission des paquets de manière à maintenir approximativement la capacité de la mémoire tampon (230) de réseau à environ le premier seuil et/ou celle de la mémoire tampon (240) de client au deuxième seuil.

**15.** Procédé selon l'une quelconque des revendications précédentes, comprenant en outre l'étape de réception de compte-rendus périodiques de retour d'information de la part du client (215).

**16.** Procédé selon la revendication 15, dans lequel les compte-rendus de retour d'information comprennent des données associées à au moins l'un parmi l'état du niveau de remplissage de la mémoire tampon de client, le numéro de séquence le plus élevé reçu par la mémoire tampon de client, et le numéro de séquence le plus ancien mis en mémoire.

17. Procédé selon l'une quelconque des revendications précédentes,
dans lequel le client (215) est un terminal de communications mobile ; et/ou
dans lequel le serveur (205) est intégré dans un terminal de communications mobile.

18. Procédé selon l'une quelconque des revendications précédentes,
dans lequel il y a une pluralité de flux de données mis en mémoire par la mémoire tampon (240) de client ; et/ou
dans lequel il y a une pluralité de flux de données mis en mémoire par la mémoire tampon (230) de réseau.

19. Procédé selon l'une quelconque des revendications précédentes, dans lequel la mémoire tampon de réseau est composée d'une pluralité de mémoires tampons couplées en série.

20. Produit de programme d'ordinateur comprenant des parties de code de programme destinées à l'exécution des étapes de l'une quelconque des revendications précédentes quand le produit de programme d'ordinateur est mis en application sur un système d'ordinateur.

21. Produit de programme d'ordinateur selon la revendication 20, dans lequel le produit de programme d'ordinateur est mémorisé sur un support d'enregistrement pouvant être lu par un ordinateur.

22. Appareil comprenant un processeur d'ordinateur et une mémoire couplée au processeur, où la mémoire est codée à l'aide d'un ou plusieurs programmes qui peuvent exécuter les étapes de l'une quelconque des revendications 1 à 19.

23. Appareil (500) adapté à commander les transmissions en paquet à partir d'un serveur couplé par l'intermédiaire d'une mémoire tampon de réseau à un client possédant une mémoire tampon de client, l'appareil comprenant :

un premier élément (520) de détermination adapté à déterminer le niveau de remplissage de la mémoire tampon de réseau ;
un deuxième élément (530) de détermination adapté à déterminer le niveau de remplissage de la mémoire tampon de client ; et
**caractérisé en ce** l'appareil (500) est en outre adapté à déterminer une taille d'un prochain paquet à transmettre ; et en ce que l'appareil comprend en outre :
un élément de commande (510) adapté à retarder la transmission du prochain paquet à transmettre si le prochain paquet à transmettre entraîne soit le dépassement d'un premier seuil par le niveau de remplissage de la mémoire tampon de réseau ou le dépassement d'un deuxième seuil par le niveau de remplissage de la mémoire tampon de client.

FIG. 1

FIG. 2

## FIG. 3

300

DETERMINE NETWORK
BUFFER FILL LEVEL — 310

DETERMINE CLIENT BUFFER
FILL LEVEL — 320

DELAY TRANSMISSION OF PACKETS IF
NETWORK BUFFER FILL LEVEL WOULD EX-
CEED A FIRST THRESHOLD OR IF CLIENT
BUFFER FILL LEVEL WOULD EXCEED A — 330
SECOND THRESHOLD IF NEXT DATA
PACKET IS TRANSMITTED

## FIG. 5

NETWORK COMPONENT

FIRST
DETERMINATION — 520          510
UNIT
                                CONTROL
                                UNIT                500

SECOND
DETERMINATION — 530
UNIT

SELECT NEXT
PACKET FOR
TRANSMISSION

410

400

SELECTED
PACKET FIT
INTO NETWORK
BUFFER

420

NO

YES

SELECTED PACKET
AND PACKETS
WITHIN NETWORK
BUFFER FIT INTO
CLIENT BUFFER

430

NO

YES

SEND SELECTED
PACKET

440

FIG. 4

buffer conditions vs time

**FIG. 6A**

600

buffer conditions vs time

**FIG. 6B**

610

buffer conditions vs time

FIG. 6C

630

buffer conditions vs time

FIG. 7A

700

FIG. 7B

FIG. 7C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0912015 A2

**Non-patent literature cited in the description**

- **OTT et al.** *Extended RTP Profile for RTCP-based Feedback,* June 2003, Internet Draft draft-ietf-avt.rtcp-feedback-07.txt
- **SCHULZRINNE et al.** RTP: A transport protocol for real-time applications. *RFC 3550,* July 2003
- **REY et al.** *RTP Retransmission Payload Format,* June 2003, Internet-Draft draft-ietf-avt-rtp-retransmission-08.txt